# DEMANDE DE BREVET EUROPEEN

(11) **EP 4 287 563 A1**
(43) Date de publication de la demande: **06.12.2023**
(21) Numéro de dépôt: 23176212.1
(22) Date de dépôt: 30.05.2023
(51) Int. Cl.: H04L 12/28, E06B 9/56, H04B 10/116, E06B 9/68

(54) **PROCÉDÉ DE COMMANDE EN FONCTIONNEMENT D'UN DISPOSITIF DE SURVEILLANCE DE LUMINOSITÉ OU D'UNE INSTALLATION COMPRENANT UN TEL DISPOSITIF**

(30) Priorité: 30.05.2022 FR 2205160
(71) Demandeur: Somfy Activites SA, 74300 Cluses (FR)
(72) Inventeur: ROUSSEAU, Fabien, 74300 CLUSES (FR)
(74) Mandataire: Novaimo

(57) **Abrégé**

Procédé de commande en fonctionnement d'un dispositif de surveillance (C) comprenant au moins un capteur de luminosité (11) et au moins un émetteur (12), le procédé comprenant au moins les étapes suivantes :
- une étape (S10) d'acquisition de variations de la luminosité détectées par le dispositif de surveillance (C) via l'au moins un capteur de luminosité (11),
- une étape (S30) de détermination d'un premier schéma de variations de la luminosité caractéristique d'une lumière artificielle à partir des variations de la luminosité détectées par l'au moins un capteur de luminosité (11) lors de l'étape (S10) d'acquisition,
- en conséquence de l'étape (S30) de détermination, une étape (S50) d'émission d'un signal par l'émetteur (12).

## Description

La présente invention concerne le domaine des dispositifs domotiques pour bâtiment à usage résidentiel, commercial ou industriel. L'invention concerne plus particulièrement un procédé de commande en fonctionnement d'un dispositif de surveillance comprenant un capteur de luminosité. L'invention porte également sur un dispositif de surveillance. L'invention porte aussi sur un procédé de commande en fonctionnement d'une installation domotique comprenant un tel dispositif de surveillance. L'invention porte également sur une installation domotique. L'invention porte également sur un programme d'ordinateur mettant en oeuvre les procédés mentionnés. L'invention porte enfin sur un support d'enregistrement sur lequel est enregistré un tel programme.

Dans les installations domotiques incorporant un grand nombre de dispositifs domotiques, il est important de faciliter la commande individuelle et la commande groupée des dispositifs domotiques. En particulier, il est intéressant de prévoir des stratégies de commande simples et pratiques qui minimisent les ressources, en particulier qui minimisent les ressources d'installation et de configuration.

Le but de l'invention est de fournir un procédé de commande en fonctionnement d'un dispositif de surveillance améliorant les procédés de commande en fonctionnement des dispositifs domotiques connus de l'art antérieur. En particulier, l'invention propose un procédé de commande en fonctionnement d'un dispositif de surveillance qui permette une commande facilitée de dispositifs domotiques.

Selon l'invention, le procédé de commande en fonctionnement d'un dispositif de surveillance comprenant au moins un capteur de luminosité et au moins un émetteur, comprend au moins les étapes suivantes :
- une étape d'acquisition de variations de la luminosité détectées par le dispositif de surveillance via l'au moins un capteur de luminosité,
- une étape de détermination d'un premier schéma de variations de la luminosité caractéristique d'une lumière artificielle à partir des variations de la luminosité détectées par l'au moins un capteur de luminosité lors de l'étape d'acquisition,
- en conséquence de l'étape de détermination, une étape d'émission d'un signal par l'émetteur.

Le signal émis par l'émetteur lors de l'étape d'émission peut comprendre au moins un premier ordre de commande d'au moins un dispositif domotique.

Le premier schéma des variations de la luminosité déterminé lors de l'étape de détermination peut comprendre au moins une alternance d'un front montant et d'un front descendant des variations de la luminosité, ce front montant et ce front descendant étant séparés l'un de l'autre par une durée prédéterminée.

L'au moins un dispositif domotique peut comprendre un premier dispositif d'écran, notamment d'écran de fermeture, d'occultation ou de protection solaire, et le dispositif de surveillance peut être configuré de sorte à émettre au moins un troisième ordre de commande de l'au moins un premier dispositif d'écran lorsqu'un franchissement d'un premier seuil de luminosité est effectué.

Le procédé peut comprendre, en outre, une étape de configuration, l'étape de configuration comprenant au moins une des sous-étapes suivantes :
- une sous-étape d'acquisition d'un signal de variations de la luminosité détectée par le capteur de luminosité,
- une sous-étape de soumission du capteur de luminosité à une série de variations de luminosité commandée par un utilisateur,
- une sous-étape de traitement du signal de variations de la luminosité détectée par le capteur de luminosité,
- une sous-étape de définition du premier schéma de variations de la luminosité en conséquence de l'étape précédente,
- une sous-étape d'enregistrement du premier schéma de variations de la luminosité,
- une sous-étape d'association de ce premier schéma de variation à une information ou à un ordre de commande.

La sous-étape de soumission du capteur de luminosité à une série de variations de la luminosité peut être réalisée par activation(s) et/ou désactivation(s) d'un système d'éclairage artificiel et/ou par masquage(s) et démasquage(s) du capteur de luminosité.

L'étape de configuration peut comprendre, en outre, une sous-étape d'émission de données de configuration du dispositif de surveillance sous forme d'un signal d'impulsions de lumière visible émis par une unité centrale de commande, et une sous-étape d'acquisition et de traitement, par le dispositif de surveillance via le capteur de luminosité, lors de l'étape d'émission de données de configuration, du signal d'impulsions de lumière visible.

Selon l'invention, le dispositif de surveillance comprend des éléments matériels et/ou logiciels configurés pour mettre en oeuvre le procédé de commande en fonctionnement défini précédemment, notamment des éléments matériels et/ou logiciels conçus pour mettre en oeuvre le procédé défini précédemment.

Selon l'invention, le dispositif de surveillance comprend des moyens de mettre en oeuvre des étapes du procédé défini précédemment.

Selon l'invention, le procédé de commande en fonctionnement d'une installation domotique comprenant un dispositif de surveillance défini précédemment, au moins un dispositif domotique et au moins un système d'éclairage artificiel, comprend au moins les étapes suivantes:
- une étape d'acquisition des variations de la luminosité détectée par le dispositif de surveillance via le capteur de luminosité,
- au moins une étape comprenant une activation ou une désactivation du système d'éclairage artificiel, notamment une série d'activation(s) et de désactivation(s) du système d'éclairage artificiel commandée par un utilisateur,
- une étape de détermination, par le dispositif de surveillance, d'un premier schéma de variations de la luminosité provoqué par l'étape précédente,
- en conséquence de l'étape de détermination, une étape d'émission d'un signal.

Selon l'invention, l'installation domotique comprend des éléments matériels et/ou logiciels mettant en oeuvre le procédé défini précédemment, notamment des éléments matériels et/ou logiciels conçus pour mettre en oeuvre le procédé défini précédemment.

Selon l'invention, l'installation domotique comprend des moyens de mettre en oeuvre des étapes du procédé défini précédemment.

Selon l'invention, le produit programme d'ordinateur comprend des instructions de code de programme enregistrées sur un support lisible par ordinateur pour mettre en oeuvre les étapes du procédé défini précédemment lorsque ledit programme fonctionne sur un ordinateur.

Selon l'invention, le produit programme d'ordinateur téléchargeable depuis un réseau de communication et/ou enregistré sur un support de données lisible par un ordinateur et/ou exécutable par un ordinateur est caractérisé en ce qu'il comprend des instructions qui, lorsque le programme est exécuté par l'ordinateur, conduisent celui-ci à mettre en oeuvre des étapes du procédé défini précédemment.

L'invention concerne aussi un support d'enregistrement de données, lisible par un ordinateur, sur lequel est enregistré un programme d'ordinateur comprenant des instructions de code de programme de mise en oeuvre du procédé défini précédemment.

L'invention concerne aussi un support d'enregistrement lisible par ordinateur comprenant des instructions qui, lorsqu'elles sont exécutées par un ordinateur, conduisent celui-ci à mettre en oeuvre le procédé défini précédemment.

L'invention concerne enfin un signal d'un support de données, portant le produit programme d'ordinateur défini précédemment.

Le dessin annexé représente, à titre d'exemple, deux modes de réalisation d'une installation domotique et un mode de réalisation d'un procédé de commande en fonctionnement d'un dispositif de surveillance d'une telle installation.
La figure 1 est une vue schématique en coupe transversale d'une installation domotique conforme à un premier mode de réalisation de l'invention ;
La figure 2 est une vue schématique en coupe transversale d'une installation domotique conforme à un deuxième mode de réalisation de l'invention ;
La figure 3 est un schéma fonctionnel d'un dispositif de surveillance utilisé dans les installations domotiques illustrées aux figures 1 et 2 ;
La figure 4 est un schéma bloc d'un procédé de commande en fonctionnement d'un dispositif de surveillance ou d'une installation domotique ;
La figure 5 est un schéma bloc d'un procédé de commande en fonctionnement d'un mode de configuration d'un dispositif de surveillance ou d'une installation domotique ;
La figure 6 est un chronogramme représentant un schéma de variations de la luminosité associé à un ordre de commande ;
La figure 7 est un graphique représentant les variations de la luminosité dans un local lors d'une phase d'activation et de désactivation d'un système d'éclairage.

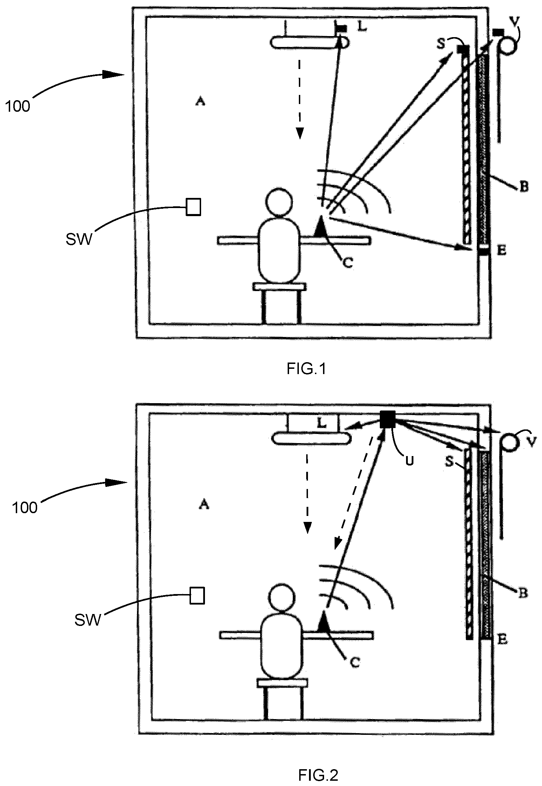

Un premier mode de réalisation d'une installation domotique 100 selon l'invention est décrit ci-après en référence à la figure 1. Sur cette figure, l'installation domotique 100 équipe un local A d'un bâtiment, comme une pièce A de ce bâtiment. Le local A présente une ouverture B fermée par une vitre E, par exemple un vitrage électro-chromique E peut être un dispositif domotique faisant partie de l'installation.

L'ouverture B est munie à l'extérieur d'un premier dispositif domotique V, notamment un premier dispositif d'écran de fermeture, d'occultation ou de protection solaire. Ce premier dispositif domotique peut être, dans le mode de réalisation décrit, un volet V, notamment un volet roulant V. Ce premier dispositif domotique fait partie de l'installation domotique 100.

L'ouverture B est munie à l'intérieur d'un deuxième dispositif domotique S, notamment d'un deuxième dispositif d'écran de fermeture, d'occultation ou de protection solaire. Ce deuxième dispositif domotique peut être, dans le mode de réalisation décrit, un store S, notamment un store vénitien. Ce deuxième dispositif domotique fait partie de l'installation domotique 100.

L'installation domotique 100 comprend encore un système d'éclairage artificiel L permettant d'éclairer le local A.

L'installation domotique 100 comprend encore un dispositif de surveillance C permettant de mesurer une luminosité dans le local et de transmettre des signaux en conséquence. Ceci permet de commander des dispositifs domotiques, notamment le volet roulant V et le store S en conséquence.

Dans le premier mode de réalisation, le dispositif de surveillance C est configuré de sorte à générer des ordres de commande et à les envoyer directement à des dispositifs domotiques, notamment au premier dispositif domotique et/ou au deuxième dispositif domotique.

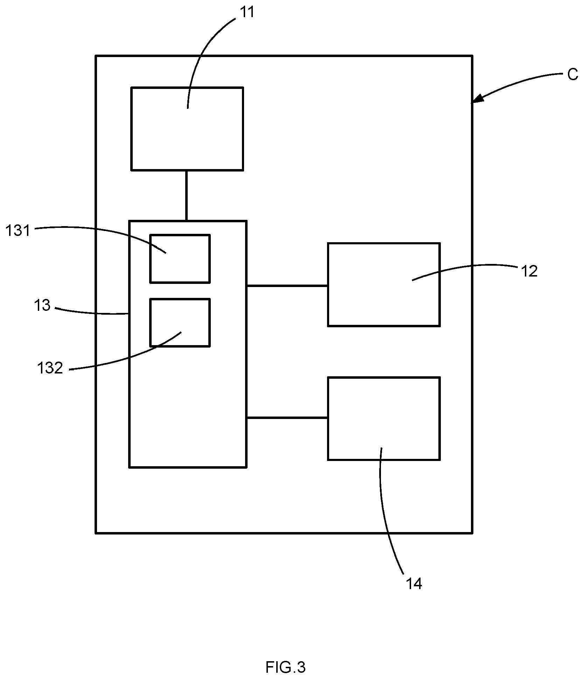

Comme représenté sur la figure 3, le dispositif de surveillance C comprend par exemple :
- un capteur de luminosité 11,
- un émetteur de signaux 12, et
- une unité logique de traitement 13, et
- une mémoire 14.

L'unité logique de traitement comprend par exemple un microprocesseur. L'unité logique de traitement permet de traiter les signaux électriques reçus du capteur de luminosité 11 et de générer en conséquence des signaux à émettre par l'émetteur 12, ces signaux pouvant contenir des ordres de commande d'au moins un dispositif domotique. Les dispositifs domotiques commandés sont de préférence des dispositifs domotiques équipant le local A. Toutefois, d'autres dispositifs domotiques, externes au local A, peuvent aussi être commandés.

L'unité logique de traitement comprend :
- un module 131 de traitement de signaux, et
- un module 132 de détection.

Le dispositif de surveillance C peut en outre comprendre une interface homme-machine.

Le dispositif de surveillance C peut être du type portable et déplaçable dans le local. Par exemple, il peut être posé sur une table comme représenté sur la figure 1. Alternativement, le dispositif de surveillance C peut être installé au niveau d'un mur du local. Le dispositif de surveillance C peut être autonome en énergie ou être connecté au réseau électrique. Le dispositif de surveillance peut comprendre un panneau photovoltaïque pour obtenir l'énergie nécessaire à son fonctionnement. Ce panneau photovoltaïque peut être utilisé comme capteur de luminosité.

Un deuxième mode de réalisation d'une installation domotique 100 selon l'invention est décrit ci-après en référence à la figure 2. Ce deuxième mode de réalisation diffère du premier en ce que le dispositif de surveillance C ne commande pas directement les dispositifs domotiques, mais émet des informations ou données qu'il adresse à une box domotique U ou unité centrale de commande U que celle-ci utilise pour générer des ordres de commande adressés à un ou plusieurs dispositifs domotiques. Dans ce mode de réalisation préféré, l'unité centrale de commande peut envoyer des ordres à destination :
- du système d'éclairage artificiel L, et/ou
- du volet roulant V, et/ou
- du store S, et/ou
- du vitrage électro-chromique E.

Par ailleurs, l'unité centrale de commande U peut émettre des informations (représentées par une flèche en pointillés sur la figure 2), notamment des informations de configuration, au dispositif de surveillance C.

Dans ce mode de réalisation, la structure du dispositif de surveillance C peut être la même. Toutefois, le dispositif de surveillance C peut être alors configuré pour émettre des informations et non des ordres de commande.

Le mode de réalisation de l'installation domotique 100, en particulier le mode de réalisation du dispositif de surveillance, comprend tous les moyens permettant de régir les fonctionnements selon les procédés objet de l'invention.

Ces moyens peuvent inclure des modules logiciels.

Par ailleurs, dans les différents modes de réalisation, le système d'éclairage artificiel L peut émettre des informations (représentées par des flèches en pointillés sur les figures 1 et 2) à l'attention du dispositif de surveillance C. Ces informations peuvent être constituées par des variations de la lumière artificielle émise par le système d'éclairage comme il sera vu plus bas.

Dans les deux modes de réalisation, l'installation domotique 100 comprend avantageusement un interrupteur SW, notamment un interrupteur tout ou rien, soit ON/OFF. Cet interrupteur est par exemple disposé sur un mur du local A. Cet interrupteur SW est destiné à être manipulé manuellement par un utilisateur. Cet interrupteur permet de commander l'alimentation du système d'éclairage artificiel L et, en conséquence, l'émission de lumière artificiel par le système d'éclairage artificiel L.

Dans les deux modes de réalisation, l'installation domotique 100 peut comprendre un détecteur (non représenté) de présence d'un utilisateur dans le local A.

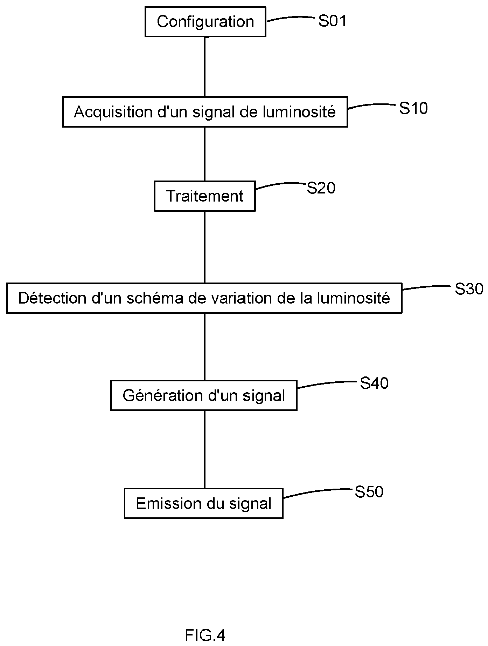

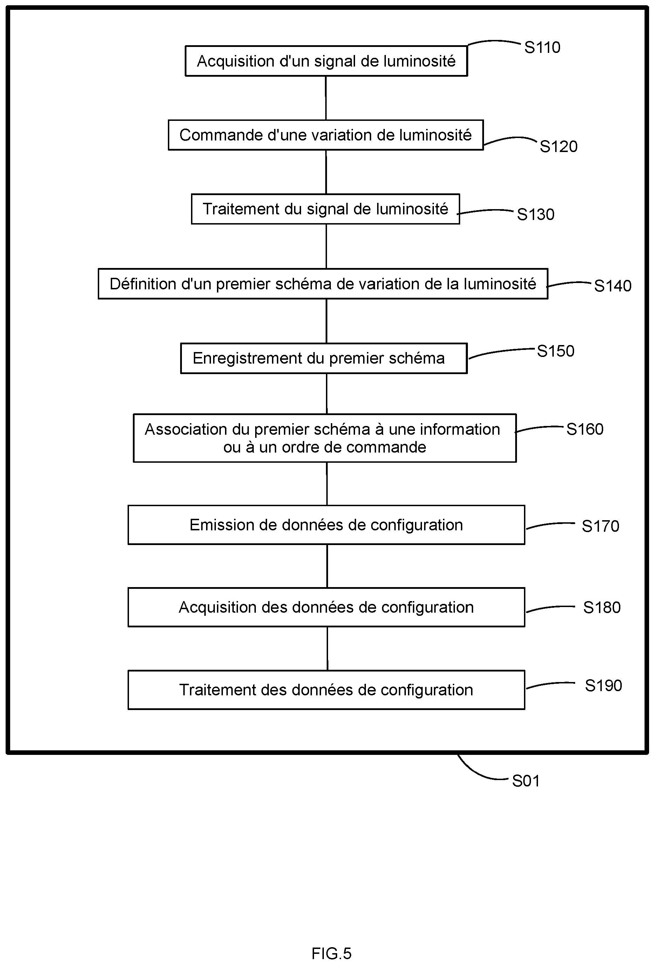

Un mode d'exécution d'un procédé de commande en fonctionnement (ou mode de fonctionnement) d'une installation domotique 100 telle que décrite précédemment et un mode d'exécution d'un procédé de commande en fonctionnement d'un dispositif de surveillance tel que décrit précédemment sont décrits ci-après en référence aux figures 4 et 5.

Le procédé de commande en fonctionnement comprend un mode de fonctionnement habituel (ou mode d'usage ou mode de fonctionnement normal) de l'installation domotique 100 ou du dispositif de surveillance dans lequel on met en oeuvre notamment les étapes S10 à S50 représentées sur la figure 4. Le procédé de commande en fonctionnement comprend un mode de configuration de l'installation domotique 100 ou du dispositif de surveillance dans lequel on met en oeuvre l'étape S01 représentée sur la figure 4 et détaillée sur la figure 5.

Après l'étape préalable S01 qui est décrite plus bas, dans une première étape S10, on acquiert un signal représentatif des variations de la luminosité dans le local A. En pratique, le capteur de luminosité 11 du dispositif de surveillance C comprend une cellule photovoltaïque ou un panneau photovoltaïque qui, exposé à la lumière ambiante dans le local A, génère un signal électrique représentatif de la luminosité dans le local A. Ce signal électrique est fourni à l'unité logique de traitement 13. A titre d'exemple nullement limitatif, le capteur de luminosité 11 du dispositif de surveillance C est un luxmètre.

Pendant cette première étape, la luminosité dans le local A évolue au gré du cycle de la journée (jour-nuit) et des différentes actions des dispositifs domotiques équipant le local, notamment au gré d'éventuelles actions d'activations et de désactivations du système d'éclairage qui peuvent être provoquées par la manipulation de l'interrupteur SW par un utilisateur et qui provoquent des variations brutales de la luminosité dans le local A. Ainsi, le capteur de luminosité 11 est soumis à une série de variations de la luminosité. En particulier, un allumage du système d'éclairage provoque une brusque augmentation de la luminosité (front montant d'un signal des variations de la luminosité). Une telle augmentation de la luminosité de la luminosité est une variation caractéristique d'une lumière artificielle. A l'inverse, une extinction du système d'éclairage provoque une brusque diminution de la luminosité (front descendant d'un signal des variations de la luminosité). Une telle diminution de la luminosité est une variation de la luminosité caractéristique d'une lumière artificielle. Le détecteur de présence d'un utilisateur peut permettre ou aider à discriminer des commandes du système d'éclairage artificiel L issues de l'interrupteur SW de commandes automatiques du système d'éclairage artificiel émises par l'unité centrale de commande U. Ainsi, dans l'étape S10, on acquiert des variations de la luminosité détectées par le dispositif de surveillance C via le capteur de luminosité.

Dans une deuxième étape S20, on traite ce signal électrique dans l'unité centrale de commande U, c'est-à-dire que le signal acquis à l'étape S10 est de préférence envoyé du dispositif de surveillance C à l'unité centrale de commande entre l'étape S10 et l'étape S20. Le traitement peut comprendre des opérations numériques ou analogiques effectuées sur le signal électrique. Ceci revient à effectuer un traitement sur les variations de la luminosité détectée dans le local A, le signal électrique étant représentatif des variations de la luminosité dans le local A. Ce traitement comprend de préférence des opérations permettant de détecter des fronts montants et des fronts descendant dans le signal électrique. Les opérations peuvent comprendre des opérations de dérivation du signal électrique par rapport au temps et des opérations de comparaison de la dérivée à des seuils. Les opérations peuvent également comprendre la prise en compte d'au moins un état statique (initial/final) déterminé afin de discriminer au moins un phénomène naturel, par exemple le levé du jour ou la tombée de la nuit, de l'au moins une action de l'utilisateur.

Alternativement, notamment dans une installation domotique 100 selon la figure 1, lors de l'étape S20, le traitement est effectué par un module 131 de traitement de l'unité logique de traitement 13 du dispositif de surveillance C. L'unité logique de traitement 13 (par exemple de type semiconducteur commercial, soit de type microcontrôleur) peut être configurée pour détecter un dépassement de seuil de luminosité réglé en dynamique et, en réponse à un tel dépassement, lever une interruption sur l'unité logique de traitement afin de passer l'unité logique de traitement dans un mode de veille.

Dans une troisième étape S30, on teste si une portion du signal reçu correspond à un ou plusieurs schémas de variation connus et stockés en mémoire, notamment dans une mémoire de l'unité centrale de commande.

Alternativement, notamment dans une installation domotique 100 selon la figure 1, lors de l'étape S30, on teste, au niveau du dispositif de surveillance, si une portion du signal reçu correspond à un ou plusieurs schémas de variation connus et stockés en mémoire, notamment dans la mémoire 14 du dispositif de surveillance. Ce test est effectué par un module 132 de détection de l'unité logique de traitement 13. Ainsi, dans l'étape S30, un schéma est déterminé à partir des variations de la luminosité détectées par l'au moins un capteur de luminosité 11 lors de l'étape S10 d'acquisition, notamment un schéma des variations de la luminosité caractéristique d'une lumière artificielle est déterminé.

Si le test est négatif, on boucle sur l'étape S10.

Si le test est positif, on passe à une quatrième étape S40. Dans cette quatrième étape S40, l'unité centrale de commande U génère un signal. Le contenu de ce signal dépend du schéma de variations de la luminosité détecté. Dans une mémoire, un ou plusieurs schémas de variations de la luminosité sont associés chacun à un contenu de signal. Selon les schémas et les applications, le contenu peut être notamment :
- une information, comme une mesure de luminosité, (qui peut éventuellement être utilisée pour générer ultérieurement un ordre de commande), ou
- un ordre de commande destiné à un ou plusieurs dispositifs domotiques de l'installation domotique 100, ou
- un ensemble d'ordres de commande destiné à un ou plusieurs dispositifs domotiques de l'installation domotique 100, de sorte à obtenir le jeu d'un scénario impliquant plusieurs dispositifs domotiques lorsque les ordres sont exécutés.

Alternativement, notamment dans une installation domotique 100 selon la figure 1, dans la quatrième étape S40, le signal peut être généré au niveau du dispositif de surveillance C. Le signal peut présenter les contenus listés précédemment. Le signal peut alternativement être :
- une information, comme une mesure de luminosité, envoyée à l'unité centrale de commande (et qui peut éventuellement être utilisée pour générer ultérieurement un ordre de commande), ou
- un ordre de commande destiné à un ou plusieurs dispositifs domotiques de l'installation domotique 100, via l'unité centrale de commande U, ou
- un ensemble d'ordres de commande destiné à un ou plusieurs dispositifs domotiques de l'installation domotique 100, via l'unité centrale de commande U, de sorte à obtenir le jeu d'un scénario impliquant plusieurs dispositifs domotiques lorsque les ordres sont exécutés.

Dans une cinquième étape S50, le signal généré est transmis à un émetteur de l'unité centrale de commande. L'émetteur envoie alors de préférence le signal sans utilisation de fil, par exemple sous la forme d'un signal radio ou d'un signal infrarouge. En alternative, l'émetteur peut envoyer le signal sur des fils dédiés ou sur des fils d'alimentation, par exemple en utilisant une technologie de courants porteurs.

En alternative, notamment dans une installation domotique 100 selon la figure 1, dans la cinquième étape S50, l'émetteur peut être l'émetteur 12 du dispositif de surveillance C. Ainsi, en conséquence de l'étape S30 de détermination, dans l'étape S50, un signal est émis.

Un premier exemple de schéma de variations de la luminosité dans le local A peut être associé à l'allumage du système d'éclairage artificiel L, notamment par manipulation de l'interrupteur SW par un utilisateur. Ainsi, l'utilisateur commande au moins une activation ou une désactivation du système d'éclairage artificiel L, notamment une série d'activation(s) et de désactivation(s) du système d'éclairage artificiel L. Ce premier exemple de schéma peut être caractérisé par une augmentation brusque de la luminosité, soit un front montant du signal de luminosité. Il peut être intéressant de reconnaître un tel schéma afin de commander, lorsqu'il se produit (soit lorsqu'on détecte une présence de lumière artificielle) au moins un dispositif domotique S, V. On prend l'exemple du local A présentant le volet V ouvert et le store S ouvert alors que la luminosité est faible du fait de la nuit ou du crépuscule, lorsqu'un utilisateur entre dans le local et qu'il agit sur un interrupteur pour activer le système d'éclairage artificiel L. Grâce aux solutions décrites plus haut, le dispositif de surveillance détecte le premier schéma de variation de la luminosité dans le local A et émet en conséquence un ordre de fermeture du volet et du store. Du point de vue de l'utilisateur, une simple action sur un interrupteur pour activer le système d'éclairage artificiel produit des commandes cohérentes de fermeture du volet V et du store S. De préférence, l'émission de ces ordres de commande peut être conditionnée à un niveau de luminosité assez faible dans le local A avant l'activation du système d'éclairage L.

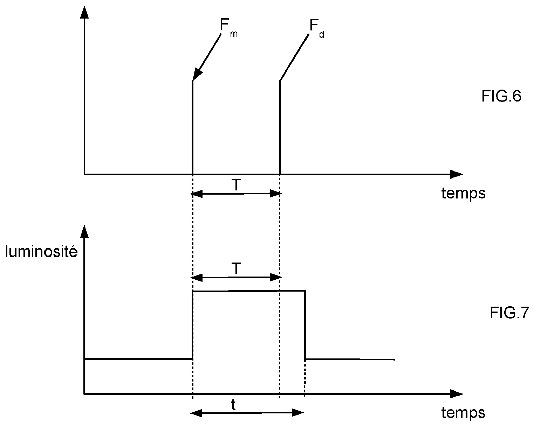

Un deuxième exemple de schéma de variations de la luminosité dans le local A peut être associé à une séquence d'activations et de désactivations du système d'éclairage artificiel L, notamment par manipulation de l'interrupteur SW par un utilisateur. Une telle forme de schéma permet de déclencher l'envoi de nombreux signaux. En effet, il est possible de définir différents schémas et donc d'associer différents signaux à ces différents schémas. Par exemple :
- une activation du système d'éclairage artificiel L, puis une désactivation du système d'éclairage artificiel L une seconde plus tard, permettent de déclencher un ordre de changement d'état (ouverture s'il était fermé et fermeture s'il était ouvert) du premier dispositif domotique comme le volet V. Un tel schéma est représenté sur la figure 6. Un front descendant Fd du signal de luminosité intervient après un front montant Fm du signal de luminosité, une durée T (ici d'une seconde) séparant ces deux fronts.
- une activation du système d'éclairage artificiel L, puis une désactivation du système d'éclairage artificiel L deux secondes plus tard, permettent par exemple de déclencher un ordre de changement d'état (ouverture s'il était fermé et fermeture s'il était ouvert) du deuxième dispositif domotique comme le store S.

Il est possible de définir d'autres schémas impliquant plus de deux actions d'activation et de désactivation et/ou de prévoir différentes durées entre ces actions afin de définir des ordres de commandes variés.

Ces actions entraînent au moins une alternance d'un front montant et d'un front descendant des variations de la luminosité dans le local A. Vu les décalages temporels des actions, ce front montant des variations de la luminosité et ce front descendant des variations de la luminosité sont en conséquence séparés l'un de l'autre par une durée. En conséquence de la détection d'un tel schéma, le dispositif de surveillance C génère et émet un ordre de commande d'au moins un dispositif domotique S, V déterminé par ce schéma.

Lorsque le dispositif de surveillance analyse un signal issu du capteur de luminosité afin de déterminer si un utilisateur a ou non produit une séquence d'activation(s) et de désactivation(s) entraînant la reproduction d'un schéma connu des variations de la luminosité dans le local A, le dispositif de surveillance ne considère pas les durées entre les activations et désactivations d'une manière stricte, ainsi par exemple toute durée comprise entre 0.5 seconde et 1.5 seconde entre deux actions est considérée comme une durée d'une seconde. Un signal issu du capteur de luminosité est représenté sur la figure 7. Un front descendant Fd du signal de luminosité intervient après un front montant Fm du signal de luminosité, ces fronts étant séparés par une durée t (ici de 1.2 seconde). Ce signal reproduit donc le schéma défini par la figure 6. En conséquence, l'ordre de commande associé à ce schéma peut être émis.

Toujours dans le mode de fonctionnement habituel, de préférence et en complément à ce qui a été décrit précédemment, le dispositif de surveillance C est configuré de sorte à émettre des ordres de commande d'ouverture ou de fermeture de manière automatique à l'un des dispositifs domotiques, notamment au store S, éventuellement par l'intermédiaire de l'unité centrale de commande U. Un ordre de commande d'ouverture est émis de préférence automatiquement lorsqu'un signal de luminosité transmis par le capteur de luminosité 11 franchit un premier seuil à la baisse et un ordre de commande de fermeture est émis de préférence automatiquement lorsque le signal de luminosité transmis par le capteur de luminosité 11 franchit un deuxième seuil à la hausse. Ces commandes automatiques permettent de réguler la luminosité dans le local A

Le procédé de commande en fonctionnement comprend encore un mode de configuration de l'installation domotique 100 (distinct et exclusif du mode de fonctionnement habituel décrit plus haut). Ce mode de configuration est représenté par l'étape S01 sur la figure 4 et décrit plus en détail en référence à la figure 5. Par exemple, ce mode de configuration comprend un apprentissage. Pour ce faire, dans le mode de configuration de l'installation domotique 100, on met par exemple en oeuvre les sous-étapes qui suivent. Ces sous-étapes sont par exemple itérées pour chaque signal de communication (information, ordre de commande) dont l'envoi doit être commandé par la reconnaissance ou détection d'un schéma particulier de variations de la luminosité dans le local A. De ce qui suit, on déduit également un mode d'exécution d'un mode de configuration du dispositif de surveillance C.

Dans une première sous-étape S110, on acquiert un signal des variations de la luminosité dans le local A. Cette sous-étape est identique à l'étape S10 décrite plus haut. La première sous-étape S110 est mise en oeuvre par le dispositif de surveillance C.

Dans une deuxième sous-étape S120 simultanément à la première sous-étape S110, un utilisateur ou un installateur actionne le système d'éclairage artificiel L selon un schéma choisi, par exemple selon la séquence suivante, activation du système d'éclairage, attente d'une seconde, désactivation du système d'éclairage. Ces différentes actions sont de préférence réalisées par manipulation de l'interrupteur SW. Ces différentes actions ont des conséquences sur le signal issu du capteur de luminosité 11.

Dans une troisième sous-étape S130, on traite ce signal électrique dans l'unité centrale de commande. Cette sous-étape est identique à l'étape S20 décrite plus haut. Cette sous-étape permet d'obtenir une séquence d'alternance(s) de fronts montants et fronts descendants séparés par des durées. Dans un cas particulier d'une seule activation ou une seule désactivation, on n'obtient qu'un front montant ou qu'un front descendant. En alternative, notamment dans une installation domotique 100 selon la figure 1, la sous-étape S130 peut être mise en oeuvre par l'unité logique de traitement 13.

Dans une quatrième sous-étape S140, on définit le résultat du traitement de la sous-étape précédente comme un schéma de variations de la luminosité qui est utilisé pour commander l'émission d'un signal de communication. Cette sous-étape S140 est mise en oeuvre par l'unité centrale de commande U. En alternative, notamment dans une installation domotique 100 selon la figure 1, la sous-étape S140 peut être mise en oeuvre par le dispositif de surveillance C.

Dans une cinquième sous-étape S150, on enregistre ce schéma de variations de la luminosité dans une mémoire. Cette sous-étape S150 est mise en oeuvre par l'unité centrale de commande U. En alternative, notamment dans une installation domotique 100 selon la figure 1, la sous-étape S150 peut être mise en oeuvre par le dispositif de surveillance C en utilisant la mémoire 14.

Dans une sixième sous-étape S160, on associe ce schéma de variation à un signal de communication (information ou à un ordre de commande). Pour ce faire, l'utilisateur ou l'installateur peut sélectionner ou définir l'association à l'aide d'une interface homme-machine prévue directement sur le dispositif de surveillance C ou prévue sur une unité centrale de commande U pouvant se connecter au dispositif de surveillance C. L'interface homme-machine peut encore se trouver sur un outil de configuration dédié à la configuration du dispositif de surveillance ou de l'installation domotique 100.

Une fois cette association effectuée et une fois l'installation domotique 100 se trouvant en mode d'utilisation, dès que le schéma est détecté, le signal de communication associé est émis par un émetteur de l'unité de commande centrale U ou par l'émetteur 12 du dispositif de surveillance C.

En alternative, à la configuration par apprentissage, l'utilisateur ou l'installateur peut effectuer la configuration en construisant les schémas en alternant les fronts et en les séparant par des durées qu'il sélectionne notamment dans une procédure de configuration guidée. En alternative encore, l'utilisateur ou l'installateur peut effectuer la configuration en sélectionnant les schémas qu'il souhaite utiliser, ces schémas se trouvant dans une bibliothèque de schémas dans une mémoire de l'unité de commande centrale U ou dans la mémoire 14.

Toujours dans le mode de configuration ou dans une phase de configuration, il est de préférence possible de transmettre des données de configuration du dispositif de surveillance C sous forme d'un signal d'impulsions de lumière visible émis par l'unité centrale de commande U ou par un outil de configuration dédié (non représenté) dans une sous-étape S170. Ces impulsions sont alors acquises dans une sous-étape S180 et traitées dans une sous-étape S190 par le dispositif de surveillance C. En effet, le capteur de luminosité 11 qui reçoit ces impulsions les transforme en signal électrique. Ce signal électrique est ensuite traité par l'unité logique de traitement et les données contenues dans le signal peuvent alors être exploitées.

Dans les solutions décrites plus haut, des variations du signal électrique issu du capteur de luminosité sont obtenues par des activations et des désactivations d'un système d'éclairage artificiel. Toutefois, quel que soit le mode de réalisation ou la variante, des variations du signal électrique issu du capteur de luminosité peuvent aussi être obtenues par des masquages et des démasquages du capteur de luminosité. Ces masquages et démasquages peuvent n'être utilisables que pour configurer l'installation domotique 100. Alternativement, ces masquages et démasquages peuvent n'être utilisables que dans le mode d'utilisation de l'installation domotique 100 pour commander l'envoi de signaux de communication. Alternativement encore, les masquages et les démasquages peuvent être utilisables dans le mode de configuration et dans le mode d'utilisation.

La technologie décrite plus haut offre notamment des solutions aux utilisateurs qui ne disposent pas de point de commande ou d'installation domotique 100 permettant de lancer des commandes groupées d'actionneurs ou de lancer des scénarios. En effet, il peut être contraignant d'aller appuyer sur tous les points de commande d'une pièce ou d'un bâtiment pour commander tous les dispositifs domotiques, d'autant que les points de commande de ces dispositifs peuvent être éloignés les uns des autres. Afin de résoudre cette problématique, la solution propose de détourner le pilotage d'un système d'éclairage artificiel d'une pièce pour générer une commande ou des commandes groupées ou des commandes de scénarios. En effet, grâce à la solution, lorsque l'utilisateur allume/éteint la lumière dans une pièce selon une séquence définie, un dispositif de surveillance peut détecter cette séquence de variations de la lumière et piloter des dispositifs domotiques en conséquence.

Notamment, les solutions décrites permettent de commander :
- une ouverture groupée des volets d'une pièce dans le noir le matin par simple séquence d'activation d'un interrupteur d'éclairage dans une pièce (allumage pendant 1s puis extinction par exemple), ou le lancement d'un scénario « je me lève » impliquant différents pilotages de différents dispositifs domotiques du logement, et/ou
- une fermeture automatique des volets le soir par détection d'absence de lumière dans la pièce, ou le lancement d'un scénario « je vais me coucher » impliquant différents pilotages de différents dispositifs domotique du logement.

L'unité centrale de commande U peut analyser :
- les différentes séquences de fonctionnement de l'installation domotique 100, et
- les différentes actions exécutées par l'installation domotique 100,
durant une période, et proposer en conséquence à l'utilisateur un scénario de commandes, notamment un scénario de commandes qui sera ensuite commandé selon les solutions objet du présent document.

## Revendications

1. Procédé de commande en fonctionnement d'un dispositif de surveillance (C) comprenant au moins un capteur de luminosité (11) et au moins un émetteur (12), le procédé comprenant au moins les étapes suivantes :
- une étape (S10) d'acquisition de variations de la luminosité détectées par le dispositif de surveillance (C) via l'au moins un capteur de luminosité (11),
- une étape (S30) de détermination d'un premier schéma de variations de la luminosité caractéristique d'une lumière artificielle à partir des variations de la luminosité détectées par l'au moins un capteur de luminosité (11) lors de l'étape (S10) d'acquisition,
- en conséquence de l'étape (S30) de détermination, une étape (S50) d'émission d'un signal par l'émetteur (12).

2. Procédé de commande en fonctionnement selon la revendication 1, **caractérisé en ce que** le signal émis par l'émetteur (12) lors de l'étape (S30) d'émission comprend au moins un premier ordre de commande d'au moins un dispositif domotique (S, V).

3. Procédé de commande en fonctionnement selon la revendication 1 ou 2, **caractérisé en ce que** le premier schéma des variations de la luminosité déterminé lors de l'étape (S30) de détermination comprend au moins une alternance d'un front montant et d'un front descendant des variations de la luminosité, ce front montant et ce front descendant étant séparés l'un de l'autre par une durée prédéterminée.

4. Procédé de commande en fonctionnement selon la revendication 2 ou 3, **caractérisé en ce que** l'au moins un dispositif domotique (S, V) comprend un premier dispositif d'écran, notamment d'écran de fermeture, d'occultation ou de protection solaire, et **en ce que** le dispositif de surveillance (C) est configuré de sorte à émettre au moins un troisième ordre de commande de l'au moins un premier dispositif d'écran lorsqu'un franchissement d'un premier seuil de luminosité est effectué.

5. Procédé de commande en fonctionnement selon l'une des revendications précédentes, **caractérisé en ce qu'**il comprend, en outre, une étape (S01) de configuration, l'étape (S01) de configuration comprenant au moins une des sous-étapes suivantes :
- une sous-étape (S110) d'acquisition d'un signal de variations de la luminosité détectée par le capteur de luminosité (11),
- une sous-étape (S120) de soumission du capteur de luminosité (11) à une série de variations de luminosité commandée par un utilisateur,
- une sous-étape (S130) de traitement du signal de variations de la luminosité détectée par le capteur de luminosité (11),
- une sous-étape (S140) de définition du premier schéma de variations de la luminosité en conséquence de l'étape précédente,
- une sous-étape (S150) d'enregistrement du premier schéma de variations de la luminosité,
- une sous-étape (S160) d'association de ce premier schéma de variation à une information ou à un ordre de commande.

6. Procédé de commande en fonctionnement selon la revendication précédente, **caractérisé en ce que** la sous-étape (S120) de soumission du capteur de luminosité (11) à une série de variations de la luminosité est réalisée par activation(s) et/ou désactivation(s) d'un système d'éclairage artificiel (L) et/ou par masquage(s) et démasquage(s) du capteur de luminosité (11).

7. Procédé de commande en fonctionnement selon la revendication 5 ou 6, **caractérisé en ce que** l'étape (S01) de configuration comprend, en outre, une sous-étape (S170) d'émission de données de configuration du dispositif de surveillance (C) sous forme d'un signal d'impulsions de lumière visible émis par une unité centrale de commande (U), et une sous-étape (S180) d'acquisition et (S190) de traitement, par le dispositif de surveillance (C) via le capteur de luminosité (11), lors de l'étape (E170) d'émission de données de configuration, du signal d'impulsions de lumière visible.

8. Dispositif de surveillance (C) comprenant des éléments (11, 12, 13) matériels et/ou logiciels configurés pour mettre en oeuvre le procédé de commande en fonctionnement selon l'une des revendications précédentes.

9. Procédé de commande en fonctionnement d'une installation domotique (100) comprenant un dispositif de surveillance (C) selon la revendication précédente, au moins un dispositif domotique (S, V) et au moins un système d'éclairage artificiel (L), le procédé comprenant au moins les étapes suivantes:
- une étape (S10) d'acquisition des variations de la luminosité détectée par le dispositif de surveillance (C) via le capteur de luminosité (11),
- au moins une étape comprenant une activation ou une désactivation du système d'éclairage artificiel (L), notamment une série d'activation(s) et de désactivation(s) du système d'éclairage artificiel (L) commandée par un utilisateur,
- une étape (S30) de détermination, par le dispositif de surveillance (C), d'un premier schéma de variations de la luminosité provoqué par l'étape précédente,
- en conséquence de l'étape (S30) de détermination, une étape (S50) d'émission d'un signal.

10. Installation domotique (100) comprenant des éléments (C, S, V) matériels et/ou logiciels mettant en oeuvre le procédé selon l'une des revendications 1 à 7 ou mettant en oeuvre le procédé selon la revendication 9, notamment des éléments matériels (11, 12, 13) et/ou logiciels conçus pour mettre en oeuvre le procédé selon l'une des revendications 1 à 7 ou pour mettre en oeuvre le procédé selon la revendication 9.

11. Produit programme d'ordinateur comprenant des instructions de code de programme enregistrées sur un support lisible par ordinateur pour mettre en oeuvre les étapes du procédé selon l'une quelconque des revendications 1 à 7 ou 9 lorsque ledit programme fonctionne sur un ordinateur.

12. Support (14) d'enregistrement de données, lisible par un ordinateur, sur lequel est enregistré un programme d'ordinateur comprenant des instructions de code de programme de mise en oeuvre du procédé selon l'une des revendications 1 à 7 ou 9.
